(19) Europäisches Patentamt
European Patent Office
Office européen des brevets

(11) EP 3 443 028 B1

(12) EUROPEAN PATENT SPECIFICATION

(45) Date of publication and mention of the grant of the patent:
**24.06.2020 Bulletin 2020/26**

(21) Application number: **17715199.0**

(22) Date of filing: **07.04.2017**

(51) Int Cl.:
***C08J 3/12*** *(2006.01)*

(86) International application number:
**PCT/EP2017/058439**

(87) International publication number:
**WO 2017/178381 (19.10.2017 Gazette 2017/42)**

# (54) A PROCESS FOR PREPARING CORE-SHELL PARTICLES HAVING A POLYMER CORE AND A CONTINUOUS SILICA SHELL, AN AQUEOUS POLYMER DISPERSION OBTAINABLE BY SAID PROCESS, A REDISPERSIBLE POLYMER POWDER, AND A COMPOSITION COMPRISING THE REDISPERSIBLE POLYMER POWDER.

VERFAHREN ZUR MODIFIZIERUNG VON POLYMERTEILCHEN EINER WÄSSRIGEN POLYMERDISPERSION, MIT DIESEM VERFAHREN HERSTELLBARE WÄSSRIGE POLYMERDISPERSION, WIEDERDISPERGIERBARES POLYMERPULVER UND ZUSAMMENSETZUNGEN MIT DEM WIEDERDISPERGIERBAREN POLYMERPULVER

PROCÉDÉ PERMETTANT DE MODIFIER DES PARTICULES POLYMÈRES À BASE D'UNE DISPERSION AQUEUSE DE POLYMÈRE, LADITE DISPERSION POUVANT ÊTRE OBTENU PAR UN TEL PROCÉDÉ, POUDRE POLYMÈRE REDISPERSIBLE ET COMPOSITION COMPRENANT UNE TELLE POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2016 EP 16165330**

(43) Date of publication of application:
**20.02.2019 Bulletin 2019/08**

(73) Proprietor: **BASF SE**
**67056 Ludwigshafen am Rhein (DE)**

(72) Inventors:
- **DIETZSCH, Michael**
  **67056 Ludwigshafen (DE)**
- **LEIDINGER, Peter**
  **67056 Ludwigshafen (DE)**
- **PUTZIEN, Sophie**
  **83308 Trostberg (DE)**
- **ALBRECHT, Gerhard**
  **83209 Prien a. Chiemsee (DE)**
- **SCHLESINGER, Maik**
  **67056 Ludwigshafen (DE)**

(74) Representative: **BASF IP Association**
**BASF SE**
**G-FLP-C006**
**67056 Ludwigshafen (DE)**

(56) References cited:
**EP-A1- 2 808 356**
**DE-A1-102007 007 336**
**US-A- 6 136 891**
**US-B1- 6 685 966**
**CN-A- 102 827 379**
**JP-A- 2008 101 049**
**US-A1- 2010 086 783**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

A process for preparing core-shell particles having a polymer core and a continuous silica shell, an aqueous polymer dispersion obtainable by said process, a redispersible polymer powder, and a composition comprising the redispersible polymer powder.

The present invention relates to a process for preparing core-shell particles having a polymer core and a continuous silica shell, an aqueous polymer dispersion obtainable by said process,a redispersible polymer powder, and a composition comprising the redispersible polymer powder.

Redispersible polymer powders are widely used in cement-based waterproofing systems, floor screeds, tile adhesives, etc. and provide flexibility and hydrophobization in these systems. Known redispersible powders (for example, Elotex®, Vinnapas®, Acronal®) are obtained by spray drying of latex dispersions in the presence of additives such as protective colloids, spray-drying aids or anti-caking additives. These additives prevent the irreversible aggregation of the polymer particles and enable sufficient redispersion in the final application system. However, they also reduce the wet-strength of the final product and may cause unwanted coloration or efflorescence. In addition, the storage stability of such polymer powders is limited and the additives impair the film formation of the polymer particles in the final application system. Thus, a redispersible polymer powder without these disadvantages would be highly desirable.

WO 2014/011730 A1 (Dow) describes redispersible multilayer polymer powder comprising an epoxy resin core and an alkali soluble polymer shell around the epoxy resin. The polymer particles are prepared by copolymerizing a monomer mixture in the presence of an epoxy resin dispersion, adding a strong acid salt or organic acid salt of a divalent metal prior to drying the dispersion.

WO 2001/029106 A1 (BASF SE) relates to a method for producing an aqueous dispersion of particles (composite particles) that are prepared by polymerizing a monomer mixture in the presence of fine particles of an inorganic solid matter such as a silica sol.

US 6,136,891 and US 6,685,966 disclose composite particles including a core of an organic polymer and a skin based on an oxide or hydroxide of aluminum, silicon, zirconium, zinc or a transition metal. The composite particles are exemplified with a core of polystyrene stabilized by polyvinylpyrrolidone or of styrene/butadiene latex with a calcium chloride intermediate layer and silicon dioxide as skin layer. The composite particles are then converted to hollow particles by calcining at 400 °C to 900 °C or by treating them with a solvent for the organic polymer. The hollow particles are used as reinforcing filler for plastics or elastomers.

EP 258 554A1 discloses rubber latex particles filled with silica. They are obtained by adding precipitated silica to a rubber latex dispersion in the presence of colloidal silica. The pH of the dispersion is then adjusted to 1 to 5 to coagulate the rubber latex. The coagulated rubber latex is used for producing vulcanisates such as seals or in the production of shoe soles.

JP 2008-101049 discloses a composite which is obtained by adding waterglass to a polylactic acid emulsion and adding sulfuric acid to coagulate the polylactic acid and silica particles. The coagulate is combined with a novolak type phenol resin to improve the friction and wear properties of molded article made of said resin.

CN 102827379 discloses a method of preparing a redispersible latex powder used as an additive for building materials. The method comprises preparing an emulsion of a cationic polymer which is stabilized by cationic emulsifiers, adding an inorganic material or a precursor thereof such as tetraethoxy silane and carrying out a sol-gel reaction.

US 2014/0031463 discloses a process for preparing a microcapsule composition, wherein the shell of the microcapsules is essentially made of silica and the core comprises at least one lipophilic component. The lipophilic component is liquid and includes polymer additives or components that modify/add to the physical material properties. The microcapsules may be incorporated into polymers to improve the processability and performance thereof.

WO 2013/050388 discloses a polymer powder which is obtained by adding a silica sol to an aqueous polymer dispersion and drying. Due to an interaction between silica particles and other components of the polymer dispersion selfcondensation of silica upon drying occurs to a much lower extent than with silica sols alone. When added to building materials, an increased adhesion effect can be achieved.

JP 2008101049 discloses a method for enhancing the properties of organic synthetic resins, such as polylactic acid, by adding waterglass to the resin and then adding an acid. What is obtained is a composite in which fine silica particles are finely and uniformly dispersed in the resin. This composite is unsuitable to be redispersed in water.

The problem underlying the invention is to provide a water-redispersible polymer powder without the disadvantages mentioned above. In particular, the polymer powder should be able to regenerate the original polymer without impairing its mechanical properties, storage stability and workability.

This problem is solved by a process for preparing core-shell particles having a polymer core and a continuous silica shell which comprises the steps of

a) providing an aqueous polymer dispersion comprising polymer particles;

b) adjusting the pH of the aqueous polymer dispersion to a value in the range from 7 to 10; and

c) adding water glass to the aqueous polymer dispersion having a pH in the range from 7 to 10 while keeping the pH in the range from 7 to 10 to give a dispersion of core-shell particles, wherein a mediator agent selected from cationic surfactants, cationic polymers, non-ionic surfactants, polyalkylene glycols, polyvinylpyrrolidone, polyamines, polyethyleneimines and anionic surfactants is added to the polymer particles of step (a).

Brief description of the drawings:

Fig. 1 is a HAADF-STEM image (high angle annular dark field) of the particles of example 8.
Fig. 2 is a photograph of the spray-dried polymer powder of example 8 before redispersion.
Fig. 3 is a photograph of the film formed after redispersion and subsequent drying of the polymer powder of figure 2.
Fig. 4 is a HAADF-STEM image (high angle annular dark field) of the particles of example 15.
Fig. 5 is a photograph of a sample of a polymer powder of the invention after a heat treatment.

The average diameter of the particles d(50) in the dispersion of step (a) is generally in the range of 10 to 2000 nm, preferably in the range from about 100 nm to 1500 nm (measured by dynamic light scattering (Z-average) with a Malvern Zetasizer Nano-ZS, as described hereinbelow). The core-shell particles obtained in step (c) in general have a particle size d(50) of $\leq$ 2.0 $\mu$m, preferably $\leq$ 1.1 $\mu$m, as determined by dynamic light scattering.

One component used in the process of the invention is, according to one embodiment, an aqueous polymer dispersion whose dispersion polymer has a glass transition temperature in the range from about -50 °C to about 50 °C.

The term "glass transition temperature" or "Tg" is in the context of this document the midpoint temperature according to ASTM D 3418-12 determined by differential thermal analysis (DSC; heating rate: 20 K/ min) [see. also Ullmann's Encyclopedia of Industrial Chemistry, page 169, Verlag Chemie, Weinheim, 1992 and Zosel in paint and varnish, 82, pages 125 to 134, 1976].

According to Fox (T. G. Fox, Bull. At the. Phys. Soc. 1956 [Ser. II] 1, page 123 and according to Ullmann's Encyclopedia of Industrial Chemistry, Vol. 19, page 18, 4. Edition, Verlag Chemie, Weinheim, 1980) the glass transition temperature of at most weakly crosslinked copolymers can be estimated to a good approximation by the following equation

$$1 / Tg = x1/Tg1 + x2/Tg2 + .... xn/Tgn,$$

where x1, x2, .... xn are the mass fractions of the monomers 1, 2, .... n and Tg1, Tg2, .... Tgn are the glass transition temperatures in degrees Kelvin of the homopolymers of the monomers 1, 2, .... n. The glass transition temperatures of these homopolymers of most ethylenically unsaturated monomers are known (or can be determined in a simple manner known per se) and are listed, for example, in J. Brandrup, E. H. Immergut, Polymer Handbook, 1 st Ed. J. Wiley, New York, 1966, 2nd Ed. J. Wiley, New York, 1975, 3rd Ed. J. Wiley, New York, 1989, and in Ullmann's Encyclopedia of Industrial Chemistry, page 169, Verlag Chemie, Weinheim, 1992.

All naturally occurring and/or synthetic polymers contemplated having a glass transition temperature in the range from about -50 °C to about 50 °C may be suitable. Examples are dispersion polymers P on basis of natural products such as nitrocellulose, cellulose esters, rosin and/or shellac. Examples for synthetic dispersion polymers are polycondensation products, such as alkyd resins, polyesters, polyamides, silicone resins and/or epoxy resins and polyadducts, such as polyurethanes. Polyaddition products are preferably polymers which are composed of ethylenically unsaturated compounds in polymerized form. The preparation of these polyaddition compounds is generally carried out by methods familiar to the skilled person, i.e. by metal complex catalyzed, anionically catalyzed, cationically catalyzed, and particularly by free-radical polymerization of ethylenically unsaturated compounds.

The free-radical polymerization of ethylenically unsaturated compounds may be effected by the method of free-radical bulk, emulsion, solution, precipitation or suspension polymerization, but the free radical aqueous emulsion polymerization is preferred.

The procedure for free radical emulsion polymerization of ethylenically unsaturated compounds (monomers) in an aqueous medium has been described, for example in Encyclopedia of Polymer Science and Engineering, Vol. 8, pages 659 ff. (1987); D.C. Blackley, in High Polymer latexes, Vol. 1, pages 35 et seq. (1966); H. Warson, The Applications of Synthetic Resin Emulsions, Chapter 5, pages 246 et seq. (1972); D. Diederich, Chemie in unserer Zeit 24, pages 135-142 (1990); Emulsion Polymerization, Interscience Publishers, New York (1965); DE-A 40 03 422, and Dispersions of synthetic high polymers, F. Holscher, Springer-Verlag, Berlin (1969).

Suitable monomers are, in particular, easily free-radically polymerizable monomers, such as ethylene, vinyl aromatic monomers such as styrene, o-methylstyrene, o-chlorostyrene or vinyltoluene, vinyl halides, such as vinyl chloride or vinylidene chloride, esters of vinyl alcohol and monocarboxylic acids having 1 to 18 C- atoms, as vinyl acetate, vinyl propionate, vinyl n-butyrate, vinyl laurate and vinyl stearate, esters of α, 3-monoethylenically unsaturated mono- and dicarboxylic acids having preferably 3 to 6 C-atoms, especially acrylic acid, methacrylic acid, maleic acid, fumaric acid and itaconic acid, with alkanols having, in general, from 1 to 12, preferably 1 to 8 and especially 1 to 4, carbon atoms, such as methyl, ethyl, n-butyl, - isobutyl, pentyl, hexyl, -heptyl-, octyl, -nonyl-, decyl and 2-ethylhexyl acrylate and methacrylate, dimethyl maleate, di-n-butyl fumarate, dimethyl maleate, di-n-butyl maleate, nitriles of α,β-monoethylenically unsaturated carboxylic acids, such as acrylonitrile, methacrylonitrile, fuma-rodinitrile, maleodinitrile and conjugated $C_4$-$C_8$ dienes such as 1, 3-butadiene and isoprene.

Said monomers generally form the principal monomers, which are used in a proportion, based on the amount of all ethylenically unsaturated compounds used for preparation (total amount), of ≥ 50 wt.-%, preferably ≥ 80 wt.-% and most preferably ≥ 90 wt.-%. In general, these monomers have only moderate to low solubility (at 20°C, 1.013 bar).

Monomers which have increased water solubility under the abovementioned conditions, are those which contain at least one acid group and/or the corresponding anion thereof or at least one amino, amido, ureido or N-heterocyclic group and/or protonated on the nitrogen either or alkylated ammonium derivatives. Examples include α, 3-monoethylenically unsaturated mono- and dicarboxylic acids and their amides such as acrylic acid, methacrylic acid, maleic acid, fumaric acid, itaconic acid, acrylamide and methacrylamide, and also vinylsulfonic acid, 2-acrylamido-2-methylpropanesulfonic acid, styrenesulfonic acid and the water-soluble salts thereof as well as N-vinylpyrrolidone, 2-vinylpyridine, 4-vinylpyridine, 2-vinylimidazole , 2-(N, N-dimethylamino)ethyl acrylate, 2-(N, N-dimethylamino)ethyl- methacrylate, 2-(N, N-diethylamino)ethyl acrylate, 2-(N, N-diethylamino)ethylmethacrylate, 2- (N-tert-butylamino)ethylmethacrylate, N-(3-N',N'-dimethylaminopropyl)methacrylamide and 2-(1-imidazolin-2-onyl)ethylmethacrylate. In the normal case, the aforementioned monomers are present only as modifying monomers in amounts of ≤ 10 wt.-%, preferably ≤ 5 wt.-%, based on the total amount of monomers.

Monomers which usually increase the internal strength of the films of the polymer matrix normally contain at least one epoxy, hydroxyl, N-methylol or carbonyl group, or at least two nonconjugated ethylenically unsaturated double bonds. Examples include monomers having two vinyl radicals, monomers containing two vinylidene radicals, or monomers containing two alkenyl radicals. Particularly advantageous are the diesters of dihydric alcohols with α, β-monoethylenically unsaturated monocarboxylic acids, among which acrylic acid and methacrylic acid are preferred. Examples of monomers having two nonconjugated ethylenically unsaturated double bonds are alkylenglycoldiacrylates and dimethacrylates, such as ethylene glycol diacrylate, 1,2-propylene glycol diacrylate, 1,3- propylene glycol diacrylate, 1,3-butylene glycol diacrylate, 1,4-butylenglykoldiacrylate ethylene glycol dimethacrylate, 1,2-propylene glycol dimethacrylate, 1,3-propylene glycol dimethacrylate, 1,3- butylene glycol dimethacrylate, 1,4-butylene glycol dimethacrylate, and divinylbenzene, vinyl methacrylate, vinyl acrylate, allyl methacrylate, allyl acrylate, diallyl maleate, diallyl fumarate, methylenebisacrylamide, Cyclopentadienylacrylat, triallyl cyanurate or triallyl isocyanurate. In this context, of particular importance are also the $C_1$-$C_8$ hydroxyalkyl esters of methacrylic and acrylic acid such as hydroxyalkyl as 2-hydroxyethyl, 3-hydroxypropyl or 4-hydroxybutyl acrylate and - methacrylate, and compounds such as diacetone acrylamide and and acetylacetoxyethyl acrylate. Frequently, the abovementioned monomers are used in amounts of ≤ 5 wt.-%, preferably ≤ 3 wt.-%, each based on the total amount of monomers used.

In one embodiment the dispersion polymer includes in copolymerized form:

| | |
|---|---|
| ≥ 50 and ≤ 99.9 wt.-% | esters of acrylic and/or methacrylic acid with alkanols having 1 to 12 C and/or styrene, or |
| ≥ 40 and ≤ 99.9 wt.-% | styrene and/or butadiene, or |
| ≥ 50 and ≤ 99.9 wt.-% | vinyl chloride and/or vinylidene chloride, or |
| ≥ 40 and ≤ 99.9 wt.-% | vinyl acetate, vinyl propionate and/or ethylene. |

In another embodiment the dispersion polymer includes in copolymerized form:

| | |
|---|---|
| ≥ 0.1 and ≤ 5wt.-% | at least one α, β- monoethylenically unsaturated mono- and/or dicarboxylic acid having 3 to 6 carbon atoms and/or the amide thereof and |
| ≥ 50 and ≤ 99.9 wt.-% | at least one ester of acrylic and/or methacrylic acid having 1 to 12 C-alkanols and/or styrene, or |
| ≥ 0.1 and ≤ 5 wt.-% | at least one α, β- monoethylenically unsaturated mono- and/or dicarboxylic acid having 3 to 6 carbon atoms and/or the amide thereof and |
| ≥ 40 and ≤ 99.9 wt.-% | styrene and/or butadiene, or |

(continued)

| | |
|---|---|
| ≥ 0.1 and ≤ 5 wt.-% | at least one α, β- monoethylenically unsaturated mono- and/or dicarboxylic acid having 3 to 6 carbon atoms and/or the amide thereof and |
| ≥ 50 and ≤ 99.9 wt.-% | vinyl chloride and/or vinylidene chloride, or |
| ≥ 0.1 and ≤ 5 wt.-% | at least one α, β- monoethylenically unsaturated mono- and/or dicarboxylic acid having 3 to 6 carbon atoms and/or the amide thereof and |
| ≥ 40 and ≤ 99.9 wt.-% | vinyl acetate, vinyl propionate and/or ethylene in copolymerized form. |

In another embodiment the dispersion polymer includes in copolymerized form:

| | |
|---|---|
| ≥ 45 and ≤ 55 wt.-% | n-butyl acrylate and / or 2-ethylhexyl acrylate |
| ≥ 45 and ≤ 55 wt.-% | styrene and / or methyl methacrylate |
| ≥ 0.1 and ≤ 5 wt.-% | acrylic acid and / or methacrylic acid and |
| ≥ 0.1 and ≤ 5 wt.-% | acrylamide and / or methacrylamide |

wherein, in all embodiments above, the total wt.-% adds up to 100, in copolymerized form.

The aqueous polymer dispersion used in step (a) is formed by emulsion polymerization of α,β-monoethylenically unsaturated monomers which is carried out in a conventional manner in the presence of a radical initiator, chain transfer agents etc., as, for example, disclosed in WO 2016/012315, page 6, lines 19 to page 10, line 6 which is incorporated herein by reference.

Typically, in the preparation of dispersion polymers P by radical-initiated aqueous emulsion polymerization dispersion aids are used that disperse both the monomer droplets and the polymer particles in the aqueous phase. Protective colloids and/or emulsifiers usually used for carrying out free radical aqueous emulsion polymerizations are suitable.

Suitable protective colloids are for example polyvinyl alcohols, cellulose derivatives or vinylpyrrolidone-containing copolymers. A detailed description of further suitable protective colloids is given in Houben-Weyl, Methods of Organic Chemistry, Volume XIV / 1, Macromolecular Materials, pages 411-420, Georg Thieme Verlag, Stuttgart., 1961. Of course, mixtures of emulsifiers and/or protective colloids can be used. Customary emulsifiers are, for example, ethoxylated mono-, di- and tri-alkylphenols (EO units: 3 to 50, alkyl radical: C4 to C12), ethoxylated fatty alcohols (EO units: 3 to 50; alkyl radical: C8 to C36) and alkali metal and ammonium salts of alkyl sulfates (alkyl: C8 to C12), of sulfuric monoesters of ethoxylated alkanols (EO units: 4 to 30, alkyl radical: C12 to C18), and ethoxylated alkylphenols (EO units: 3 to 50, alkyl radical: C4 to C12), of alkylsulfonic acids (alkyl radical: C12 to C18) and of alkylarylsulfonic acids (alkyl radical: C9 to C18). Further suitable emulsifiers are given in Houben-Weyl, Methods of Organic Chemistry, Volume XIV / 1, Macromolecular Materials, pages 192 to 208 Georg-Thieme-Verlag, Stuttgart., 1961.

Suitable surfactants are further compounds of the general formula I

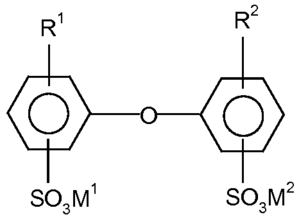

(I) ,

wherein $R^1$ and $R^2$ are H or $C_4$ to $C_{24}$ alkyl but not simultaneously H, and $M^1$ and $M^2$ are alkali metal ions or ammonium ions.

The polymer particles in the aqueous polymer dispersion of step (a) may have a negative or positive surface charge or may be uncharged. In general, the surface charge of the polymer particles is in the range selected from the following ranges:

i) about + 300 μmol/g polymer to about -300 μmol/g polymer, or
ii) about + 200 μmol/g polymer to about -200 μmol/g polymer or
iii) from about + 100 μmol/g polymer to about -100 μmol/g polymer.

The surface charge is determined by titration with poly-DADMAC (poly(diallyldimethyl-ammonium chloride)) or sodium polyethylene sulfonate using a Mettler Toledo DL 28 Titrator combined with a BTG Mütek Particle charge detector.

A negative surface charge may be achieved by copolymerizing at least one anionic or anionogenic monomer. Thus, the polymer may be a copolymer formed of at least one nonionic monomer and at least one anionic or anionogenic monomer which is copolymerizable with the nonionic monomer. Suitable nonionic monomers are, for example, esters of $C_3$-$C_6$ $\alpha,\beta$-monoethylenically unsaturated mono and $\alpha,\beta$-monoethylenically unsaturated $C_4$-$C_8$ dicarboxylic acids, such as acrylic acid, methacrylic acid, maleic acid, fumaric acid and itaconic acid, with linear or branched $C_1$-$C_{12}$ alkanols, preferably $C_1$-$C_8$ alkanols. Examples for such esters are methyl acrylate, ethyl acrylate, n-butyl acrylate, isobutyl acrylate, t-butyl acrylate, octyl acrylate, 2-ethylhexyl acrylate, decyl acrylate, methyl methacrylate, ethyl methacrylate, n-butyl methacrylate, isobutyl methacrylate, t-butyl methacrylate, octyl methacrylate, 2-ethylhexyl methacrylate, decyl methacrylate, dimethylfumarate, di-n-butyl fumarate, dimethyl maleate, or di-n-butyl maleate. Suitable nonionic monomers are also vinylaromatic monomers, such as styrene, a-methylstyrene, o-chlorostyrene, or vinyltoluenes; olefins, such as ethylene or propylene; vinyl halides, such as vinyl chloride or vinylidene chloride; or vinyl or allyl esters of $C_1$-$C_{18}$, preferably $C_1$-$C_{12}$, monocarboxylic acids, such as vinyl acetate, vinyl propionate, vinyl n-butyrate, vinyl laurate or vinyl stearate. One, two or more of the nonionic monomers may be used.

The anionic or anionogenic monomers have an anionic or anionogenic functionality in their molecules such as -COOH, $-SO_3H$, $-OPO_3H_2$, $-PO_3H$, -OH or -CN (the -CN group may be at least partially hydrolyzed in alkaline medium to a carboxyl group). The preferred functionality is a carboxyl group -COOH. Suitable monomers are, for example, $C_3$-$C_6$ $\alpha,\beta$-monoethylenically unsaturated mono and dicarboxylic acids or anhydrides of said dicarboxylic acids, such as acrylic acid, methacrylic acid, crotonic acid, itaconic acid, fumaric acid, maleic acid, or maleic anhydride; vinylsulfonic acid, 2-acrylamido-2-methylpropane sulfonic acid, 2-sulfoethyl acrylate, 2-sulfoethyl methacrylate, sulfopropyl acrylate, sulfopropyl methacrylate, styrene sulfonic acid, and 2-propene-1-sulfonic acid, vinylphosphonic acid, vinylbenzylphosphonic acid. Said monomers may be used in form of the acid or in form of the salt thereof.

A positive surface charge may be achieved by copolymerizing at least one cationic or cationogenic monomer. Thus, the polymer may be a copolymer formed of at least one nonionic monomer and at least one cationic or cationogenic monomer which is copolymerizable with the nonionic monomer. Suitable nonionic monomers are as given above.

The cationic or cationogenic monomers have a cationic or cationogenic functionality in their molecules such as $-NH_2$, $-NH_3^+$, $NR_3$, $-NR_3^+$. The preferred functionality is a quaternary ammonium group. Suitable monomers are, for example, 2-aminoethylacrylate, 2-aminoethylmethacrylate, 2-ammoniumethylacrylate chloride, 2-ammoniumethylmethacrylate chloride, 2-dimethylaminoethylacrylate, 2-dimethylaminoethylmethacrylate 2-trimethylammoniumethyl-acrylate chloride, 2-trimethylammoniumethylmethacrylate chloride,

In an embodiment, the polymer is $\alpha$) a copolymer of a non-ionic monomer (i) which is selected from esters of $C_3$-$C_6$ $\alpha,\beta$-monoethylenically unsaturated monocarboxylic acid and $\alpha,\beta$-monoethylenically unsaturated $C_4$-$C_8$dicarboxylic acids, a further non-ionic monomer (ii) which is selected from vinylaromatic monomers, such as styrene, a-methylstyrene, o-chlorostyrene, or vinyltoluenes, and vinyl or allyl esters of $C_1$-$C_{18}$, preferably $C_1$-$C_{12}$, monocarboxylic acids, such as vinyl acetate, vinyl propionate, vinyl n-butyrate, vinyl laurate or vinyl stearate and anionic or anionogenic monomers (iii) having an anionic or anionogenic functionality in their molecules.

The copolymer $\alpha$) may include units of additional monomers (iv). Such monomers are selected from (meth)acrylamide, N,N-mono- und di-$C_1$-$C_4$-alkyl(meth)acrylamides, (meth)acrylnitrile, N-vinyl derivates of cyclic lactams, hydroxy-$C_2$-$C_4$-alkyl(meth)acrylates, N,N-mono- und di-$C_1$-$C_4$-alkylaminoalkyl(meth)acrylates. Preferred monomers (iv) are hydroxy-$C_2$-$C_4$-alkyl(meth)acrylates, such as hydroxyethyl acrylate or hydroxyethyl methacrylate; acrylamide, methacrylamide acrylonitrile, and methacrylonitrile.

The copolymer $\alpha$) may also be crosslinked. This is achieved by using in addition at least one crosslinking agent (v) with two or more functional groups that is copolymerized or can react with functional groups of comonomers, in particular comonomers having two or more ethylenic unsaturations, such as butadiene, divinyl benzene, vinyl (meth)acrylate, allyl (meth)acrylate, diallyl maleate, methylenebisacrylamide, or alkylene glycol di(meth)acrylates such as ethylene glycol di(meth)acrylate, 1,2-propylene glycol di(meth)acrylate or 1,3-propylene glycol di(meth)acrylate, or glycidyl(meth)acrylate.

According to an embodiment, the copolymer $\alpha$) is prepared by copolymerizing at least one nonionic monomer (i) selected from esters of $C_3$-$C_6$ $\alpha,\beta$-monoethylenically unsaturated monocarboxylic acids and $C_4$-$C_8$ $\alpha,\beta$-monoethylenically unsaturated dicarboxylic acids, in particular methyl acrylate, ethyl acrylate, n-butyl acrylate, methyl methacrylate, ethyl methacrylate, and n-butyl methacrylate, at least one vinylaromatic monomer (ii), in particular styrene or a-methylstyrene, at least one anionic or anionogenic monomer (iii) selected from $C_3$-$C_6$ $\alpha,\beta$-monoethylenically unsaturated mono acids, in particular acrylic acid or methacrylic acid, optionally an additional monomer (iv), in particular (meth)acrylonitrile and/or (meth)acrylamide, and optionally a crosslinking monomer (v), in particular butadiene, glycidyl(meth)-acrylate or divinylbenzene.

According to a further embodiment, the polymer is $\beta$) a copolymer of at least one nonionic monomer selected from vinylaromatic monomers, in particular styrene or $\alpha$-methylstyrene, with (meth)acrylonitrile and a crosslinking monomer, in particular butadiene.

In a still further embodiment the polymer is γ) a copolymer of at least one olefin such as ethylene with at least one vinyl ester of a $C_1$-$C_{18}$ monocarboxylic acid, such as vinyl acetate.

In a still further embodiment the polymer is δ) a polyurethane comprising carboxylic acid and/or carboxylate groups and/or sulfo groups. Such polyurethanes may be obtained by reacting at least one polyisocyanate with at least one anionogenic polyol having two or more hydroxyl groups reactive towards polyisocyanates and one or more carboxyl and/or sulfo groups which are inert to polyisocyanates and some or all of which can be converted into carboxylate and/or sulfo groups in the presence of bases. Examples for such polyols are 2-hydroxymethyl-3-hydroxypropanoic acid, 2-hydroxymethyl-3-methyl-3-hydroxypropanoic acid, 2-hydroxymethyl-2-ethyl-3-hydroxypropanoic acid, 2-hydroxymethyl-2-propyl-3-hy-droxypropanoic acid, citric acid, tartaric acid, [tris(hydroxymethyl]-3-aminopropanesulfonic acid, building blocks based on 1,3-propane sulfone or 3-mercaptopropanesulfonic acid sodium salt. The molecular weight of the polyol is, in general, in the range from 100 to 1000 Dalton. Preferred polyurethanes of this type are disclosed in US 6,825,268, in particular in the claims, which is incorporated herein by reference in its entirety.

The ionic or ionogenic monomers are used in an amount sufficient to achieve a sufficient negative or positive "surface charge" in the range from about -30 μmol/g polymer to about -300 μmol/g polymer or from about +30 μmol/g polymer to about +300 μmol/g polymer, preferably in the range from about -20 μmol/g polymer to about -300 μmol/g polymer or from about +50 μmol/g polymer to about +300 μmol/g polymer and in particular in the range from about -10 μmol/g polymer to -200 μmol/g polymer or from about +50 μmol/g polymer to about +200 μmol/g polymer. The anionic or anionogenic monomers are used in an amount sufficient to achieve a surface charge of the polymer in the range from about -5 μmol/g polymer to about -200 μmol/g polymer, preferably in the range from about -10 μmol/g polymer to about -150 μmol/g polymer.

Aqueous polymer dispersions that are commercially available and particularly suitable for use in step (a) are, for example, the Acronal® dispersions (acrylic and styrene acrylic dispersions) or Styrofan© dispersions (styrene butadiene dispersions) of BASF SE. Other particularly suitable aqueous polymer dispersions are ethylene-vinylacetate dispersions (Vinnapas® from Wacker AG or Elotex® from Akzo Nobel).

The term "(meth)" as used herein means that the chemical names in which it is used comprise the respective acrylic and methacrylic compound.

To improve the deposition of the silica particles on the polymer particles, the surface of the polymer particles is modified by coating the surface of the polymer particles with a mediator agent. The mediator agent is added to the polymer dispersion of step (a) prior to adjusting the pH in accordance with step (b). The mediator agent is preferably one that changes the surface charge of the polymer particles. The mediator agent is selected from cationic surfactants, cationic polymers, non-ionic surfactants, polyalkylene glycols, polyvinylpyrrolidone, polyamines, polyethyleneimines and anionic surfactants.

In one embodiment, the amount of the mediator agent is selected such that the surface charge of the polymer is in the range from about + 50 μmol/g polymer to about -20 μmol/g polymer.

If a surfactant is used as mediator, the hydrophobic tail of the surfactant will be oriented towards the polymeric core, whereas the ionic or ionizable or non-ionic head of the surfactant molecules will be oriented towards the aqueous medium conferring a surface charge to the polymer particle. Suitable surfactants are, for example, the formaldehyde condensates of naphthalene sulfonic acid, phenol sulfonic acid or melamine sulfonic acid, sulfonated ketone (acetone) formaldehyde condensate, alkali metal or ammonium salts of $C_8$-$C_{12}$ alkyl sulfates, alkali metal or ammonium salts of saturated or unsaturated $C_8$-$C_{18}$ fatty alcohol sulfates, alkali metal or ammonium salts of sulfuric acid half esters of saturated or unsaturated $C_8$-$C_{18}$ fatty alcohols which are ethoxylated with 2 to 50 ethylene oxide units or of $C_4$-$C_{12}$ alkylphenols which are ethoxylated with 3 to 50 ethylene oxide units, or of $C_9$-$C_{18}$ alkylaryl sulfonic acids, alkali metal or ammonium salts of mono- or di-$C_8$-$C_{18}$ alkyl sulfosuccinates, alkali metal or ammonium salts of mono- or di-$C_8$-$C_{18}$ alkenyl sulfosuccinates, alkali metal or ammonium salts of mono- or di-$C_8$-$C_{18}$ alkyl sulfosuccinates which are ethoxylated with 2 to 50 ethylene oxide units, alkali metal or ammonium salts of mono- or di-$C_8$-$C_{18}$ alkenyl sulfosuccinates which are ethoxylated with 2 to 50 ethylene oxide units, acidic phosphoric acid esters of $C_8$-$C_{18}$ alkanols which are ethoxylated with 2 to 50 ethylene oxide units and the alkali metal or ammonium salts thereof, alkali metal or ammonium salts of saturated or unsaturated $C_8$-$C_{18}$ fatty acids, saturated or unsaturated $C_8$-$C_{18}$ fatty alcohols which are ethoxylated with 2 to 50 ethylene oxide units and the phosphorylated, carboxylated or sulfated derivatives thereof, $C_9$-$C_{13}$ oxoalcohols which are ethoxylated with 2 to 50 ethylene oxide units, $C_8$-$C_{14}$ alkylpolyglucosides, ethylene oxide-propylene oxide block polymers with 10 to 80 % ethylene oxide units, or polycarboxylate ethers (comb polymers having a backbone of units with anionic or anionogenic groups and $C_2$-$C_4$ polyalkylene oxide side chains, for example as disclosed for example in WO 2014/013077, pages 10-22, embodiments 25-49). The amount of surfactant is, in general, 0.1 wt.-% to 10 wt.-%, based on the weight of the polymer.

The surfactant may already be comprised by the polymer dispersion used or may be added prior to the addition of the first or, respectively, second water-soluble salt. Thus, when using a surfactant to achieve the surface charge, it is not required to use a comonomer having an ionic or ionogenic functionality in its molecule.

In case no mediator is used, the aqueous polymer dispersion and/or the water glass is used in diluted form. It is preferred that the total solids concentration (polymer plus water glass) is not higher than 1 wt%.

The aqueous polymer dispersion of step (a) in general has a pH below 9. In step (b) the pH is adjusted to a value in the range of 7 to 10, preferably 8 to 10 and in particular >8 to 10. For this purpose, either an organic or inorganic acid, for example sulfuric acid, hydrochloric acid, nitric acid, formic acid, acetic acid, etc. or an alkali hydroxide, for example sodium hydroxide, potassium hydroxide is added to the dispersion.

In step (c) water glass in the form of an aqueous solution is added to the polymer dispersion of step (b). As water glass has a pH above 11, the pH has to be kept in the range from 7 to 10 by adding an organic or inorganic acid (for examples see the preceding paragraph). As water glass sodium or potassium silicate can be used. The modulus of the water glass, i.e. the molar ratio of $SiO_2$ to $Na_2O$ or $K_2O$, is, in general, in the range from 1 to about 3.5. The concentration of the water glass in the aqueous solution is, in general, in the range from about 0.5 % by weight to about 30 % by weight, based on solid content.

The polymer and water glass are used in amounts such that the weight of the polymeric core is in the range from about 60% to about 95% and the weight of the silica shell is in the range from about 5% to about 40%, based on the total weight of the coated polymer.

The obtained dispersion has to be dried in order to obtain the redispersible polymer powder. Drying can be carried out in a conventional manner, for example by spray drying, fluidized bed drying, drum drying, flash drying, freeze drying or drying under ambient conditions.

The process of the invention results in a redispersible polymer powder formed of particles which comprise an organic polymeric (latex) core and a dense continuous shell (layer) of silica formed from the water glass used in step (c). The thickness of the shell is, in general, in the range from about 1.5 nm to about 150 nm, preferably 1.5 to 10 nm, according to transmission electron microscopy (TEM) data. Shell thickness can be controlled by the amount of water glass used. The shell prevents the organic polymer in the core from moving and diffusing into another particle even in case the organic polymer has a glass transition below 0 °C. Thus, the inorganic shell prevents agglomeration (caking) of the polymer particles during drying and storage with no or less drying additives being required (if compared to existing technology). Thus, the redispersible polymer powder has a high storage stability, does not lead to any coloration and improves the wet strength of the final product. In addition, as long as the shell is intact and fully surrounding the polymer core, the polymer core cannot unfold its properties and is protected from outside influences. Only after the shell is at least partially removed, in particular by dissolution or shear stress, the core can develop its properties and is accessible to influences of the surrounding medium (concept of triggered release). For example, when the polymer powder is finally applied, for instance in a cementitious composition, the inorganic shell is at least partially removed by dissolving at alkaline pH and/or by shear stress during mixing and the latex particle is released. The inorganic shell (salt) is embedded in the cementitious matrix and the latex particles can develop their properties and are, for example, able to form a film whereas the silica has no negative effect on the final performance profile and may even improve the wet strength of the cement.

"Redispersible" as used herein means that the particle size, as determined by dynamic light scattering, of the polymer particles after drying and redispersing in artificial pore solution (alkaline aqueous solution containing: $Ca^{2+}$ 10mmol/L, $Na^+$ 98.5 mmol/L, $K^+$ 181.6 mmol/L, $SO_4^{2-}$ 86.2 mmol/L, pH=13.1) is $\leq$ 5 $\mu$m, preferably $\leq$ 3 $\mu$m and in particular $\leq$ 1 $\mu$m. Furthermore, the redispersed latex dispersion exhibits film formation when dried again.

The invention also relates to a redispersible polymer powder comprising particles having a polymeric core having a glass transition temperature Tg (midpoint temperature according to ASTM D3418-82) in the range from about - 50 °C to about +50 °C and a continuous silica shell.

According to another embodiment, the invention relates to a redispersible polymer powder obtainable according to the processes of the invention.

The redispersible polymer powder of the invention has an average particle size d(50) after drying in the range from about 10 $\mu$m to about 100 $\mu$m. Upon redispersion the average particle size d(50) is $\leq$ 2 $\mu$m, preferably $\leq$1.1 $\mu$m and in particular in the range from about 100 nm to about 1500 nm.

Further, the invention relates to a composition comprising a redispersible polymer powder of the invention. According to an embodiment, the composition is a building material composition which comprises a hydraulic binder such as cement, in particular OPC (ordinary Portland cement), high alumina cement, a latent hydraulic binder such as metakaolin, calcium metasilicate, volcanic slag, volcanic tuff, trass, fly ash, blast furnace slag etc. or a non-hydraulic binder such as gypsum, including $\alpha$- and $\beta$-hemihydrate or anhydrite. According to an embodiment, the composition is a dry mortar composition, which can be formulated as repair mortar, tile adhesive, tile grout, self-leveling floor screed, self-leveling smoothing, underlayment, overlayment, sealing slurry, sealing mud or cementitious industrial floor composition.

The compositions of the invention may contain additives such as pigments, flame-proofing materials, crosslinkers, fillers, like sand, lime or silica, reinforcing agents such as fibers, antioxidants, fungicides, accelerators such as alkali metal carbonates, retardants such as tartaric acid or citric acid, thickeners, foam inhibitors, preservatives, wetting agents,

rheology modifying agents, vulcanizing agents, adhesion aids, etc.

The following examples illustrate the invention without limiting it.

Dispersions used for modification are given in table 1:

Table 1

| **Dispersion** | **Characterization** | **Solid content [w%]** | **Tg [°C]** | **Surface Charge [μmol/g]*** | **DLS-data** Z-average (d.nm) |
|---|---|---|---|---|---|
| **D1** | Acrylic dispersion (54.2% MMA, 44.3% BA, 1.5% AS) | 42 | -6 | -120 | 132 |
| **D2** | Acrylic dispersion (50% BA, 49% S, 1 % AS) | 50 | 19 | -60 | 291 |
| **D3** | Acrylic dispersion (57% EHA, 33% S, 6% BA, 4% AS) | 54.8 | -15 | -20 | 231 |
| **D4** | Dispersion of poly-(vinylacetate/ ethylene) | 60.9 | 19 | 0 | 1130 |
| **D5** | Styrene butadiene dispersion (66% S, 34% B) | 50.5 | 18 | -260 | 190 |
| * determined by titration against poly-DADMAC<br>S= Styrene, BA= Butyl acrylate, B= butadiene, AS= Acrylic acid, EHA= Ethyl hexyl acrylate, MMA=Methyl methacrylate. | | | | | |

DLS = dynamic light scattering:

The particle size distribution is determined using a Malvern Zetasizer Nano ZS (Malvern Instruments GmbH, Germany). The software utilized for measurement and evaluation is the Malvern software package belonging to the instrument. The measurement principle is based on dynamic light scattering, more particularly on non-invasive backscattering. Unless otherwise stated, the particle sizes given throughout the present specification are so-called $d_{(63)}$-values, meaning that 63 % of the measured particles are below the given value.

**Example 1:** Modification of dispersion D1

The modification of the latex particles is performed in aqueous solution (dispersion) under pH control in a round bottom flask.

50 g dispersion D1 (21 g pure polymer) were stirred (500 rpm) in a round bottom flask, diluted with 100 g $H_2O$, and heated to 60 °C. 2 g of cetyltrimethylammonium bromide (CTAB) were added and stirred for another 10 min. The pH was adjusted to 9 (1M sodium hydroxide solution). 161 g of a 5 wt% (here and in the following: solid content) water glass solution (modulus 3.45) was added dropwise while the pH of the dispersion was kept constant at 9 by continuously and dropwise adding a 1M sulfuric acid solution. After 4 hours, the solid was filtered off and dried at ambient temperature, which resulted in a colorless powder. The modified dispersion was also freeze (5 mbar, -84°C for 18 h) and spray-dried.

Example 1 was repeated with the following variations:

**Example 2:** 315 g of a 5 wt% water glass solution (modulus 1.0) instead of 5 wt% water glass solution with a modulus of 3.45
**Example 3:** 2.1 g polyethylene glycol 300 instead of CTAB
**Example 4:** 2.1 g polyethylene glycol 6000 instead of CTAB
**Example 5:** 2.1 g polyvinylpyrrolidon 8000 instead of CTAB
**Example 6:** pH variations between 8 and 10.

The results were similar to that one of example 1.

**Example 8:** Modification of dispersion D2 60 g of dispersion D2 (30 g pure polymer) were stirred (500 rpm) in a round bottom flask, diluted with 150 g $H_2O$, and heated to 60 °C. 2.5 g of cetyltrimethylammonium bromide (CTAB) were added and stirred for another 10 min. The pH was adjusted to 9 (1M sodium hydroxide solution). 495 g of a 5 wt% water glass solution (modulus 1.0) was added dropwise while the pH of the dispersion was kept constant at 9 by

continuously and dropwise adding a 1M sulfuric acid solution. After 4 hours, the solid was filtered off and dried at ambient temperature, which resulted in a colorless powder. The modified dispersion was also freeze (5 mbar, -84°C for 18 h) and spray-dried.

The formation of the core-shell particle was confirmed by HAADF-STEM images (high-angle annular dark field). The particles of example 8 are shown in figure 1.

The redispersibility of the particles of example 8 in artificial pore solution (containing: $Ca^{2+}$: 10mmol/L, $Na^{+}$: 98.5 mmol/L, $K^{+}$: 181.6 mmol/L, $SO_4^{2-}$: 86.2 mmol/L, pH=13.1) after 15 min. was examined and the particle size of the redispersed particles and their polydispersity (PDI) were determined by dynamic light scattering (Z-average) with a Malvern Zetasizer Nano-ZS and are shown in table 2. The presence of particle sizes below 1.5 μm indicate sufficient redispersion as primary polymeric particles are released. Laser diffraction analysis data indicate a comparable redispersibility to the commercially available powder and are shown in table 3.

Table 2

| Modification | DLS-data Z-average (d.nm) | DLS-data PDI |
|---|---|---|
| Dispersion D2 | 292 | 0.06 |
| commercially available powder of dispersion D2 | 548 | 0.167 |
| Particles of example 8, dried under ambient conditions | 370 | 0.153 |
| Particles of example 8, freeze-dried | 398 | 0.069 |
| Particles of example 8, spray-dried | 462 | 0.104 |

Table 3

| | d(0.1 )/μm | d(0.5)/μm | d(0.9)/μm | d(0.632)/μm |
|---|---|---|---|---|
| Dispersion D2 | 0.142 | 0.403 | 1.01 | 0.64 |
| commercially available powder of dispersion D2 | 2.087 | 23.621 | 92.412 | 37.428 |
| Particles of example 8, dried under ambient conditions | 2.578 | 19.736 | 116.827 | 36.053 |

Images of the particles of example 8 before and after redispersion are shown in figures 2 and 3. Figure 2 shows the formation of a free-flowing powder after spray drying that indicates the presence of a dense continuous silica shell enclosing the polymeric core of the particles. After redispersion the shell is at least partially destroyed and the polymeric core is set free to enable film formation, see figure 3.

Example 8 was repeated with the following variations:

**Example 9:** The amount of the 5 wt% water glass solution was varied between 160 g and 853.5 g

**Example 10:** 5 g Lupasol G100 (polyethyleneimine; 50.6 wt% solution) instead of CTAB

**Example 11:** 6.25 g Luviquat Excellence (copolymer of vinylpyrrolidone and quaternized vinylimidazole; 40 wt% solution) instead of CTAB

**Example 12:** 12.5 g PolyDADMAC (20 wt% solution) instead of CTAB

**Example 13:** pH variations between 8 and 10

**Example 14 (comparative example):** Modification of dispersion D2 using fumed silica particles

6 g of dispersion D2 (3 g pure polymer) were stirred (500 rpm) in a round bottom flask, diluted with 50 g $H_2O$, and heated to 60 °C. 0.25 g or 0.5 g of cetyltrimethylammonium bromide (CTAB) or no mediator were added and stirred for another 10 min. The pH was adjusted to 9 (1M sodium hydroxide solution). 1.86 g of fumed silica (Sigma-Aldrich, d50 ~ 7nm; equivalent amount of $SiO_2$ precipitation corresponding to the use of water glass) were added at a constant pH of 9. After 4 hours, the solid was filtered off and dried at ambient temperature, which resulted in a sticky agglutinated powder. The powder shows no redispersibility.

**Example 15:** Modification of dispersion D3

60 g of dispersion D3 (32.88 g pure polymer) were stirred (500 rpm) in a round bottom flask, diluted with 150 g $H_2O$, and heated to 60 °C. 2.5 g of cetyltrimethylammonium bromide (CTAB) were added and stirred for another 10 min. The pH was adjusted to 9 (1M sodium hydroxide solution). 940 g of a 5 wt% water glass solution (modulus 1.0) was added dropwise at a constant pH of 9 by dropwise adding a 1M sulfuric acid solution. After 4 hours, the solid was filtered off and dried at ambient temperature, which resulted in a colorless powder. The modified dispersion can also be freeze (5 mbar, -84°C for 18 h) and spray-dried.

Alternative procedure:

100 g of a 1wt% dispersion D3 (1 g pure polymer) were stirred (500 rpm) in a round bottom flask. 15 g of a 3.48 wt% water glass solution (modulus 3.45, referred to solid content) was added dropwise at a constant pH of 8 by dropwise adding a 0.5M hydrochloric acid solution at room temperature. After 4 hours, the solid was poured into 200 g of an aqueous saturated sodium chloride solution. The formed precipitate was filtered off and dried at ambient temperature, which resulted in a colorless powder.

The formation of the core-shell particle was confirmed HAADF-STEM images (high-angle annular dark field). The particles of example 15 are shown in figure 4.

Example 15 was repeated with the following variations:

**Example 16:** The amount of the 5 wt% water glass solution was varied between 453 g and 1206 g
**Example 17:** 2.5 g polyethylene glycol 300 instead of CTAB
**Example 18:** 2.5 g polyethylene glycol 6000 instead of CTAB
**Example 19:** 2.5 g polyethylene glycol 8000 instead of CTAB
**Example 20:** 2.5 g Lupamin 4595 (29.18 wt% aqueous solution of a polyvinylamide homopolymer which is hydrolysed to about 95% and which has a molecular weight of about 45.000 g/mol)
**Example 21:** 2.5 g Lupamin 4570 (32.12 wt aqueous solution of a polyvinylamide homopolymer which is hydrolysed to about 70% and which has a molecular weight of about 45.000 g/mol)
**Example 22:** 2.5 g Lupamin 1595 (30.75 wt aqueous solution of a polyvinylamide homopolymer which is hydrolysed to about 95% and which has a molecular weight of about 10.000 g/mol)
**Example 23:** 6.25 g Luviquat Excellence (copolymer of vinylpyrrolidone and quaternized vinylimidazole; 40 wt% solution) instead of CTAB
**Example 24:** 12.5 g PolyDADMAC (20 wt% solution) instead of CTAB
**Example 25:** 5 g Lupasol G100 (50.6 wt% solution) instead of CTAB
**Example 26:** pH variations between 8 and 10.

**Example 27:** Modification of dispersion D4

60 g of dispersion D4 (36.54 g pure polymer) were stirred (500 rpm) in a round bottom flask, diluted with 250 g $H_2O$, and heated to 50 °C. 2.5 g of cetyltrimethylammonium bromide (CTAB) were added and stirred for another 10 min. The pH was adjusted to 9 (1M sodium hydroxide solution). 1100 g of a 5 wt% water glass solution (modulus 1.0) was added dropwise at a constant pH of 9 by dropwise addition of a 1M sulfuric acid solution. After 4 hours, the solid was filtered off and dried at ambient temperature, which resulted in a colorless powder. The modified dispersion can also be freeze dried (5 mbar, -84°C for 18 h).

Alternative procedure:

50 g of dispersion D4 (30.45 g pure polymer) were stirred (500 rpm) in a round bottom flask, diluted with 150 g $H_2O$, and heated to 50 °C. The pH was adjusted to 8.5 (1M sodium hydroxide solution). 461.5 g of a 5 wt% water glass solution (modulus 1.0) was added dropwise at a constant pH of 8.5 by dropwise addition of a 0.33 M sulfuric acid solution. After 4 hours, the solid was filtered off and dried at ambient temperature, which resulted in a colorless powder.

Example 27 was repeated with the following variations:

**Example 28:** The amount of the 5 wt% water glass solution was varied between 554 g and 1728 g
**Example 29:** 2.5 g polyethylene glycol 20000 instead of CTAB
**Example 30:** pH variations between 8 and 9.5.

**Example 31:** Modification of dispersion D5

60 g of dispersion D5 (30.30 g pure polymer) were stirred (500 rpm) in a round bottom flask, diluted with 250 g $H_2O$, and heated to 60 °C. 5 g of cetyltrimethylammonium bromide (CTAB) were added and stirred for another 10 min. The pH was adjusted to 9 (1M sodium hydroxide solution). 488 g of a 5 wt% water glass solution (modulus 1.0) was added dropwise and the pH was kept at a constant pH of 9 by dropwise addition of a 1M sulfuric acid solution. After 4 hours, the solid was filtered off and dried at ambient temperature, which resulted in a colorless powder. The modified dispersion can also be freeze dried (5 mbar, -84°C for 18 h).

Example 31 was repeated with the following variations:

**Example 32:** The amount of the 5 wt% water glass solution was varied between 488 g and 1600 g
**Example 33:** pH variations between 8 and 9.5.
**Example 34** (comparative example): Modification of dispersion D2 using silica sols

6 g dispersion D2 (3 g pure polymer) were stirred (500 rpm) in a round bottom flask, diluted with 50 g $H_2O$, and heated to 60 °C. 0.25 g or 0.5 g of cetyltrimethylammonium bromide (CTAB) or no mediator were added and stirred for another 10 min. The pH was adjusted to 9 (1M sulfuric acid solution). 8.88 g of Köstrosol 0515 (~5 nm, anionic; Co. Chemiewerke Bad Köstritz) 4.44g of Köstrosol 1030 (~10 nm, anionic; Co. Chemiewerke Bad Köstritz) or 4.44 g of Köstrosol K1530 (~15 nm, cationic; Co. Chemiewerke Bad Köstritz) - an equivalent amount of $SiO_2$ precipitation if water glass is used - whereby the pH was kept constant by addition of 1M sulfuric acid solution. After 4 hours, the solid was filtered off and dried at ambient temperature, which resulted in a sticky agglutinated powder. The obtained powders did not show redispersibility.

**Example 35** (comparative example): Modification of dispersion D3 using silica sols

6 g dispersion D3 (3 g pure polymer) were stirred (500 rpm) in a round bottom flask, diluted with 50 g $H_2O$, and heated to 60 °C. 0.625 g of Luviquat Excellence (40 wt% solution) or no mediator were added and stirred for another 10 min. The pH was adjusted to 9 (1M sulfuric acid solution). 4.44 g of Köstrosol 1030 (~ 10 nm, anionic; Co. Chemiewerke Bad Köstritz) or 4.44 g of Köstrosol K1530 (~15 nm, cationic; Co. Chemiewerke Bad Köstritz) - an equivalent amount of $SiO_2$ precipitation if water glass is used - whereby the pH was kept constant by addition of 1M sulfuric acid solution. After 4 hours, the solid was filtered off and dried at ambient temperature, which resulted in a sticky agglutinated powder. The obtained powders showed no redispersibility.

**Example 36:** Use of modified dispersion D2 within a cementitious tile adhesive formulation.

The polymer powder of example 8 was subjected to an application test in tile adhesives. The composition is given in table 4.

Table 4

| **Compound** | **Amount [g]** |
|---|---|
| Quarzsand HS 5 | 267.5 |
| Milke CEM 52,5 | 175 |
| Calciumformate | 5 |
| Juraperle Ulmerweiss MHMS | 30 |
| Cellulose ether MC30US | 1.5 |
| Starvis SE 45 F | 1 |
| **Total:** | **480** |
| Dispersion (g polymer) | **20** |
| Water | **95** |

Milke Cem I 52.5 is a Portland cement available commercially from Heidelberg Cement AG. Juraperle Ulmerweiss MHMS is limestone (calcium carbonate) from Eduard Merkle GmbH & Co.KG., Blaubeuren-Altental, Germany. Cellulose ether MC30US is a cellulose ether (Samsung Fine Chemicals), Starvis SE 45 F is a rheology modifying air-void stabilizing agent from BASF SE, Ludwigshafen, Germany and Starvis T 50 F is a thickener for improved mixing properties (BASF SE, Germany).

The amount of dispersion was always calculated to 4% polymer (without the weight of the silica shell) content in total. If liquid dispersions were used, 20 g polymer (calculated for pure polymer) were added and the amount of additionally added water was reduced by the amount present in the liquid dispersion.

After hardening for 28 days a 3-point bending test of the test specimen was performed. Hereby, a 3-point flexural bending strength (DIN EN 12002 using a Zwick Roell 1120 test machine) between 2.27 mm and 2.33 mm was observed when using the composition comprising the core-shell particles of the invention. The reference sample, prepared using the same conditions but without said particles shows values of 1.53 mm.

**Example 37:** Storage stability of modified dispersion D2.

The modified polymer powder of D2 (example 8) was packed between two microscope glass sheets. Subsequently, a weight of 1 kg was placed on top of these slides and the whole setup was placed in a drying oven at 60 °C for one week. Finally, the powder quality was evaluated. The modified polymer powder of example 8 showed no changes in appearance (Fig. 5). This means that the polymer powder of the invention has a high storage stability (no caking and no discoloration).

## Claims

1. A process for preparing core-shell particles having a polymer core and a continuous silica shell which comprises the steps of

   a) providing an aqueous polymer dispersion comprising polymer particles;
   b) adjusting the pH of the aqueous polymer dispersion to a value in the range from 7 to 10; and
   c) adding water glass to the aqueous polymer dispersion having a pH in the range from 7 to 10 while keeping the pH in the range from 7 to 10 to give a dispersion of the core-shell particles,
   wherein a mediator agent selected from cationic surfactants, cationic polymers, non-ionic surfactants, polyalkylene glycols, polyvinylpyrrolidone, polyamines, polyethyleneimines and anionic surfactants is added to the polymer particles of step (a).

2. The process of claim 1, wherein the surface charge of the polymer particles is in the range from + 300 μmol/g polymer to -300 μmol/g polymer.

3. The process of claim 1 or 2, wherein the pH in step (b) is adjusted in the range from 8 to 10, in particular 8 to 9.

4. The process of any one of the preceding claims, wherein the pH in step (c) is kept in the range from 8 to 10, in particular 8 to 9.

5. The process of any one of the preceding claims, wherein the water glass used in step (c) has a modulus in the range from 1 to 4.

6. The process of any one of the preceding claims, wherein the polymer is

   α) a copolymer of a non-ionic monomer (i) which is selected from esters of $C_3$-$C_6$ a,β-monoethylenically unsaturated monocarboxylic acid and α,β-monoethylenically unsaturated $C_4$-$C_8$ dicarboxylic acids, a further non-ionic monomer (ii) which is selected from vinylaromatic monomers, and vinyl or allyl esters of $C_1$-$C_{18}$ monocarboxylic acids and anionic or anionogenic monomers (iii) having an anionic or anionogenic functionality in their molecules, or
   β) a copolymer of at least one nonionic monomer selected from vinylaromatic monomers with (meth)acrylonitrile and butadiene, or
   γ) a copolymer of at least one olefin with at least one vinyl ester of a $C_1$-$C_{18}$ monocarboxylic acid, or
   δ) a polyurethane comprising carboxylic acid and/or carboxylate groups and/or sulfo groups.

7. The process of any one of the preceding claims, wherein the obtained dispersion of step c) is dried to obtain a redispersible polymer powder.

8. An aqueous polymer dispersion obtainable by a process of any one of claims 1 to 6 or a redispersible polymer powder obtainable by the process of claim 7.

9. A redispersible polymer powder comprising particles having a polymeric core having a glass transition temperature Tg (midpoint temperature according to ASTM D3418-82) in the range from -50 °C to +50 °C and a continuous silica shell.

10. A composition comprising the aqueous polymer dispersion of claim 8 or the redispersible polymer powder of claim 8 or 9.

11. The composition of claim 10, in the form of a building material composition.

12. The composition of claim 10 or 11, in the form of a dry mortar composition, in particular a repair mortar, tile adhesive, tile grout, self-leveling floor screed, self-leveling smoothing, underlayment, overlayment, sealing slurry, sealing mud, joint filler or cementitious industrial floor composition.

## Patentansprüche

1. Verfahren zur Herstellung von Kern-Schale-Partikeln mit einem Polymerkern und einer kontinuierlichen Silika-Schale, das folgende Schritte umfasst:

   a) Bereitstellen einer wässrigen Polymerdispersion, die Polymerpartikel umfasst;
   b) Einstellen des pH-Werts der wässrigen Polymerdispersion auf einen Wert im Bereich von 7 bis 10 und
   c) Zugeben von Wasserglas zu der wässrigen Polymerdispersion mit einem pH-Wert im Bereich von 7 bis 10 unter Halten des pH-Werts im Bereich von 7 bis 10, was eine Dispersion der Kern-Schale-Partikel ergibt, wobei ein Mediatormittel, das aus kationischen Tensiden, kationischen Polymeren, nichtionischen Tensiden, Polyalkylenglykolen, Polyvinylpyrrolidon, Polyaminen, Polyethyleniminen und anionischen Tensiden ausgewählt ist, zu den Polymerpartikeln von Schritt (a) gegeben wird.

2. Verfahren nach Anspruch 1, bei dem die Oberflächenladung der Polymerpartikel im Bereich von +300 µmol/g Polymer bis -300 µmol/g Polymer liegt.

3. Verfahren nach Anspruch 1 oder 2, bei dem der pH-Wert in Schritt (b) im Bereich von 8 bis 10, insbesondere 8 bis 9, eingestellt wird.

4. Verfahren nach einem der vorhergehenden Ansprüche, bei dem der pH-Wert in Schritt (c) im Bereich von 8 bis 10, insbesondere 8 bis 9, gehalten wird.

5. Verfahren nach einem der vorhergehenden Ansprüche, bei dem das in Schritt (c) verwendete Wasserglas einen Modul im Bereich von 1 bis 4 aufweist.

6. Verfahren nach einem der vorhergehenden Ansprüche, bei dem es sich bei dem Polymer um

   α) ein Copolymer von einem nichtionischen Monomer (i), das aus Estern von α,β-monoethylenisch ungesättigten $C_3$-$C_6$-Monocarbonsäuren und α,β-monoethylenisch ungesättigten $C_4$-$C_6$-Dicarbonsäuren ausgewählt ist, einem weiteren nichtionischen Monomer (ii), das aus vinylaromatischen Monomeren und Vinyl- oder Allylestern von $C_1$-$C_{18}$-Monocarbonsäuren ausgewählt ist, und anionischen oder anionogenen Monomeren (iii) mit einer anionischen oder anionogenen Funktionalität in ihren Molekülen oder
   β) ein Copolymer von mindestens einem nichtionischen Monomer, das aus vinylaromatischen Monomeren ausgewählt ist, mit (Meth)acrylnitril oder Butadien oder
   γ) ein Copolymer von mindestens einem Olefin mit mindestens einem Vinylester einer $C_1$-$C_{18}$-Monocarbonsäure oder
   δ) ein Polyurethan mit Carbonsäure- und/oder Carboxylatgruppen und/oder Sulfogruppen handelt.

7. Verfahren nach einem der vorhergehenden Ansprüche, bei dem die erhaltene Dispersion von Schritt c) zum Erhalt eines redispergierbaren Polymerpulvers getrocknet wird.

**8.** Wässrige Polymerdispersion, die durch ein Verfahren nach einem der Ansprüche 1 bis 6 erhältlich ist, oder redispergierbares Polymerpulver, das durch das Verfahren nach Anspruch 7 erhältlich ist.

**9.** Redispergierbare Polymerpulver, umfassend Partikel mit einem polymeren Kern mit einer Glasübergangstemperatur Tg (Midpoint-Temperatur gemäß ASTM D3418-82) im Bereich von -50 °C bis +50 °C und einer kontinuierlichen Silika-Schale.

**10.** Zusammensetzung, umfassend die wässrige Polymerdispersion nach Anspruch 8 oder das redispergierbare Polymerpulver nach Anspruch 8 oder 9.

**11.** Zusammensetzung nach Anspruch 10 in Form einer Baustoffzusammensetzung.

**12.** Zusammensetzung nach Anspruch 10 oder 11 in Form einer Trockenmörtelzusammensetzung, insbesondere eines Reparaturmörtels, eines Fliesenklebers, eines Fliesenmörtels, einer selbstverlaufenden Bodenestrichmasse, einer selbstverlaufenden Glättungsmasse, einer Unterlage, einer Oberlage, eines Dichtschlamms, eines Fugenfüllers oder einer zementösen Industriefußbodenzusammensetzung.

## Revendications

**1.** Procédé pour la préparation de particules de type noyau-enveloppe possédant un noyau de polymère et une enveloppe continue de silice qui comprend les étapes de

a) mise à disposition d'une dispersion aqueuse de polymère comprenant des particules de polymère ;
b) ajustement du pH de la dispersion aqueuse de polymère à une valeur dans la plage de 7 à 10 ; et
c) ajout de verre à eau à la dispersion aqueuse de polymère possédant un pH dans la plage de 7 à 10 tout en maintenant le pH dans la plage de 7 à 10 pour donner une dispersion des particules de type noyau-enveloppe, un agent médiateur choisi parmi les tensioactifs cationiques, les polymères cationiques, les tensioactifs non ioniques, les polyalkylèneglycols, la polyvinylpyrrolidone, les polyamines, les polyéthylèneimines et les tensioactifs anioniques, étant ajouté aux particules de polymère de l'étape (a).

**2.** Procédé selon la revendication 1, la charge de surface des particules de polymère étant dans la plage de +300 $\mu$moles/g de polymère à -300 $\mu$moles/g de polymère.

**3.** Procédé selon la revendication 1 ou 2, le pH dans l'étape (b) étant ajusté dans la plage de 8 à 10, en particulier de 8 à 9.

**4.** Procédé selon l'une quelconque des revendications précédentes, le pH dans l'étape (c) étant maintenu dans la plage de 8 à 10, en particulier de 8 à 9.

**5.** Procédé selon l'une quelconque des revendications précédentes, le verre à eau utilisé dans l'étape (c) possédant un module dans la plage de 1 à 4.

**6.** Procédé selon l'une quelconque des revendications précédentes, le polymère étant

$\alpha$) un copolymère d'un monomère non ionique (i) qui est choisi parmi des esters d'acides monocarboxyliques monoéthyléniquement $\alpha$,$\beta$-insaturés en $C_3$-$_6$ et d'acides dicarboxyliques monoéthyléniquement $\alpha$,$\beta$-insaturés en $C_4$-$_8$, d'un monomère non ionique supplémentaire (ii) qui est choisi parmi des monomères vinylaromatiques, et des esters de vinyle ou d'allyle d'acides monocarboxyliques en $C_1$-$_{18}$ et de monomères anioniques ou anionogéniques (iii) possédant une fonctionnalité anionique ou anionogénique dans leurs molécules, ou
$\beta$) un copolymère d'au moins un monomère non ionique choisi parmi des monomères vinylaromatiques avec le (méth)acrylonitrile et le butadiène ; ou
$\gamma$) un copolymère d'au moins une oléfine avec au moins un ester de vinyle d'un acide monocarboxylique en $C_1$-$_{18}$, ou
$\delta$) un polyuréthane comprenant des groupes acide carboxylique et/ou carboxylate et/ou des groupes sulfo.

**7.** Procédé selon l'une quelconque des revendications précédentes, la dispersion obtenue de l'étape c) étant séchée pour obtenir une poudre de polymère redispersible.

**8.** Dispersion aqueuse de polymère pouvant être obtenue par un procédé selon l'une quelconque des revendications 1 à 6 ou poudre de polymère redispersible pouvant être obtenue par le procédé selon la revendication 7.

**9.** Poudre de polymère redispersible comprenant des particules possédant un noyau polymérique possédant une température de transition vitreuse Tv (température de point milieu selon la norme ASTM D3418-82) dans la plage de -50 °C à +50 °C et une enveloppe continue de silice.

**10.** Composition comprenant la dispersion aqueuse de polymère selon la revendication 8 ou la poudre de polymère redispersible selon la revendication 8 ou 9.

**11.** Composition selon la revendication 10, sous forme d'une composition de matériau de construction.

**12.** Composition selon la revendication 10 ou 11, sous forme d'une composition de mortier sec, en particulier une composition de mortier de réparation, de colle à carrelage, d'enduit à carrelage, de chape autonivelante, de lissage autonivelant, de sous-finition, de sur-finition, de suspension de scellement, de boue de scellement, de pâte d'étanchéité ou de sol industriel à base de ciment.

Fig. 1

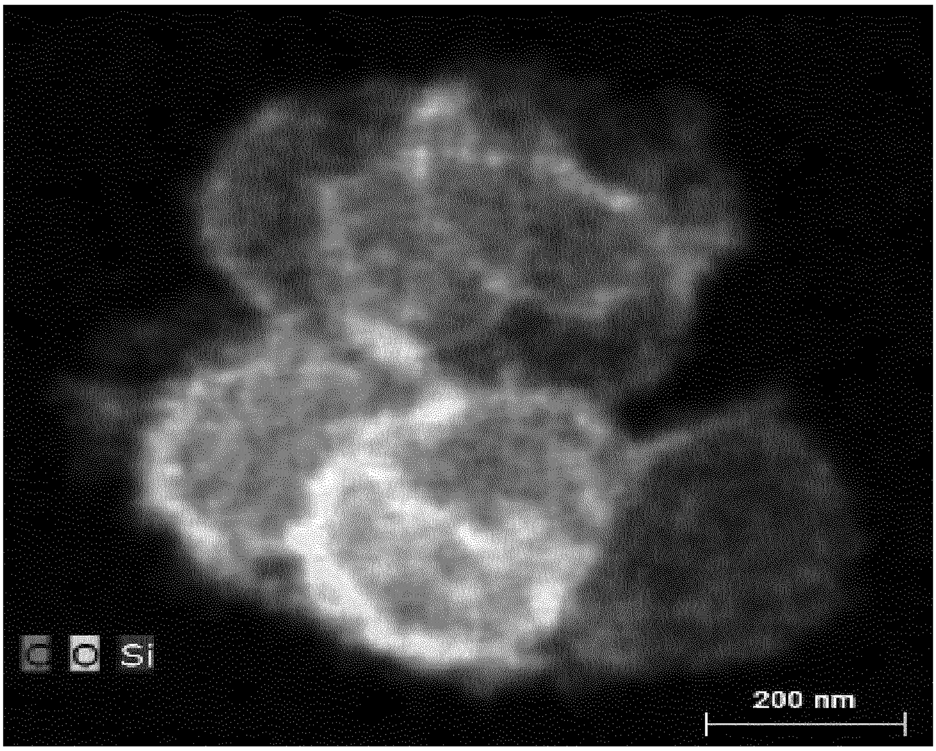


Fig. 2

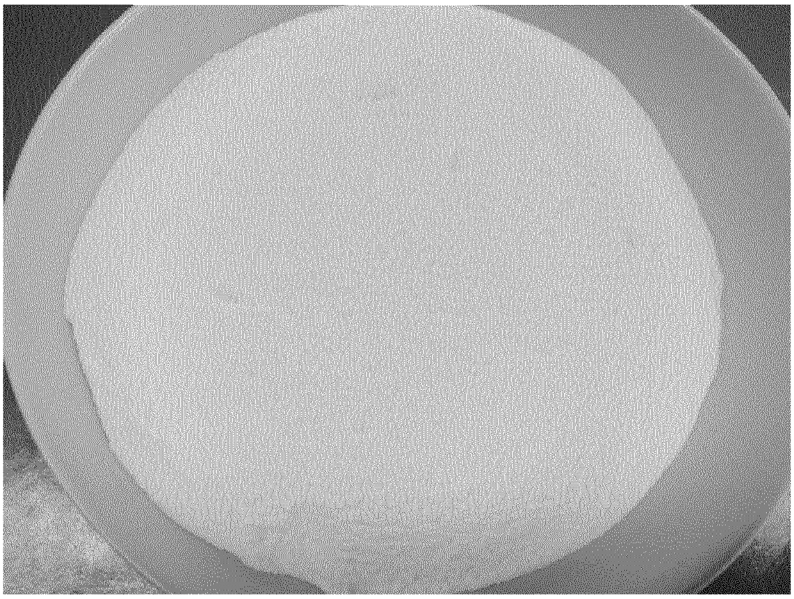

Fig. 3

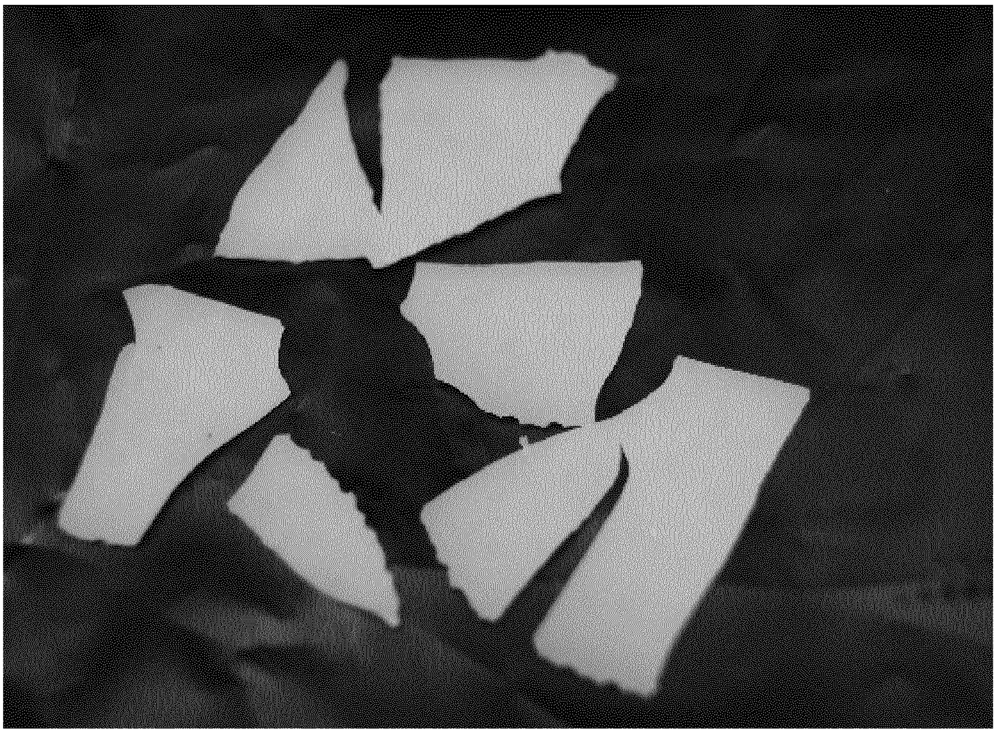

Fig. 4

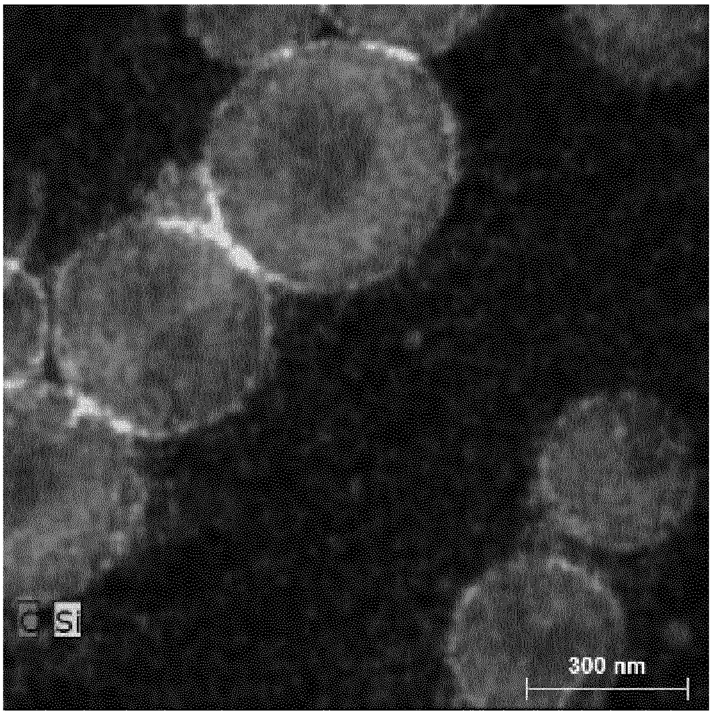

Fig. 5

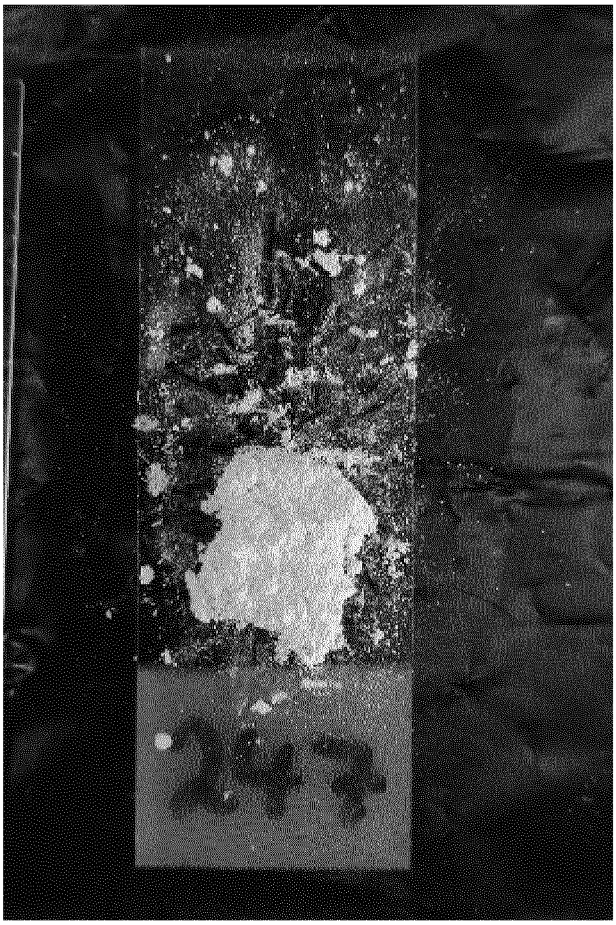

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014011730 A1, Dow
- WO 2001029106 A1
- US 6136891 A
- US 6685966 B
- EP 258554 A1
- JP 2008101049 A
- CN 102827379
- US 20140031463 A
- WO 2013050388 A
- JP 2008101049 B
- DE 4003422 A
- WO 2016012315 A
- US 6825268 B
- WO 2014013077 A


### Non-patent literature cited in the description


- Ullmann's Encyclopedia of Industrial Chemistry. Verlag Chemie, 1992, 169
- **ZOSEL.** *paint and varnish,* 1976, vol. 82, 125-134
- **T. G. FOX.** *Bull. At the. Phys. Soc.,* 1956, vol. 1, 123
- Ullmann's Encyclopedia of Industrial Chemistry. Verlag Chemie, 1980, vol. 19, 18
- **J. BRANDRUP ; E. H. IMMERGUT.** Polymer Handbook. J. Wiley, 1966
- POLYMER HANDBOOK. J. Wiley, 1975
- POLYMER HANDBOOK. J. Wiley, 1989
- Encyclopedia of Polymer Science and Engineering. 1987, vol. 8, 659 ff
- **D.C. BLACKLEY.** *High Polymer latexes,* 1966, vol. 1, 35
- **H. WARSON.** The Applications of Synthetic Resin Emulsions. 1972, 246
- **D. DIEDERICH.** *Chemie in unserer Zeit,* 1990, vol. 24, 135-142
- Emulsion Polymerization. Interscience Publishers, 1965
- **F. HOLSCHER.** Dispersions of synthetic high polymers. Springer-Verlag, 1969
- Methods of Organic Chemistry. **HOUBEN-WEYL.** Macromolecular Materials. Georg Thieme Verlag, 1961, vol. XIV / 1, 411-420
- Methods of Organic Chemistry. **HOUBEN-WEYL.** Macromolecular Materials. Georg-Thieme-Verlag, 1961, vol. XIV / 1, 192-208